# EUROPÄISCHE PATENTSCHRIFT

(11) **EP 0 445 312 B1**
(45) Veröffentlichungstag und Bekanntmachung des Hinweises auf die Patenterteilung: **31.05.1995**
(21) Anmeldenummer: 90104140.0
(22) Anmeldetag: 03.03.1990
(51) Int. Cl.: H02G 1/08, H02G 1/06

(54) **Vorrichtung zum Verlegen von Kabeln oder flexiblen Rohren über eine Verlegungsstrecke**
Device for laying cables or flexible pipes on a track
Dispositif de pose de câbles ou de tuyaux flexibles sur un trajet de pose

(43) Veröffentlichungstag der Anmeldung: 11.09.1991
(73) Patentinhaber: KATIMEX CIELKER GMBH, D-54587 Birgel (DE)
(72) Erfinder: Cielker, Werner, D-5534 Birgel (DE)
(74) Vertreter: Köhne, Friedrich, Dipl.-Ing.

(56) Entgegenhaltungen:
- DE-A- 2 909 662
- DE-A- 3 515 256
- DE-A- 3 625 928
- DE-U- 7 730 332
- DE-U- 8 234 075
- FR-A- 2 614 698
- GB-A- 2 074 971
- US-A- 3 971 544

## Beschreibung

Die Erfindung bezieht sich auf eine Vorrichtung zum Verlegen von Kabeln oder flexiblen Rohren über eine Verlegungsstrecke mit einer Aufwickelvorrichtung und einer Antriebsvorrichtung für ein Zugmittel an dem einen Ende der Verlegungsstrecke und mit einer Kabeltrommel an dem anderen Ende der Verlegungsstrecke, wobei die Aufwickelvorrichtung ein Gestell mit einem Haspelrad aufweist und wobei zwischen der Antriebsvorrichtung und dem benachbarten Ende der Verlegungsstrecke eine Führung vorgesehen ist.

Eine Vorrichtung der zuvor genannten Gattung ist aus der DE 36 25 928 A1 bekannt. Bei dieser Vorrichtung haben sich jedoch eine Reihe von Problemen ergeben. Die Antriebsvorrichtung ist so konzipiert, daß sie das Zugmittel von der Aufwickelvorrichtung kontinuierlich abzieht. Da das Haspelrad der Aufwickelvorrichtung aber immer eine gewisse Unwucht hat, bildet das Zugmittel im Bereich zwischen diesen beiden Vorrichtungen immer wieder unerwünschte Bögen oder Ausweichungen. Trotz der vorgesehenen vertikalen Führung bilden sich weitere Bögen oder Schleifen zwischen der Antriebsvorrichtung und dem oberen Ende der Führung sowie zwischen dem unteren Ende der Führung und dem Eingang in die Verlegungsstrecke. Das bekannte Zugmittel besteht aus einem druck- und zugfesten aber auch flexiblen bzw. biegsamen Stab, der aufgrund der innewohnenden Spannung das Bestreben hat, sich geradlinig auszudehnen. Die Biegsamkeit des Stabes ist aber begrenzt, d.h. der Stab kann bei der Bildung der Bögen ausknicken. Wenn sich erst einmal Knicke gebildet haben, kann sich der Stab nicht wieder geradlinig zurückbiegen, so daß er dann unbrauchbar ist und durch einen anderen Stab ersetzt werden muß. Die Gefahr der Bögen- oder Schleifenbildung oder der Ausbildung von nicht regenerierbaren Knicken ist umso größer, je größer der Gegendruck ist, der durch die Reibung beim Einschieben des Zugmittels in die Verlegungsstrecke entsteht. Da die Verlegungsstrecken meist mehrere Hundert Meter lang sind, ist es nicht möglich, mit der bekannten Vorrichtung einen ausreichenden Schiebedruck auf den flexiblen Stab des Zugmittels auszuüben, um ihn mit Sicherheit über die gesamte lange Verlegungsstrecke einzuschieben.

Aus der DE-A-15 15 956 ist bereits eine Anlage mit einem Motorfahrzeug bekannt, auf dem sich eine Winde für ein Zugseil und eine oder mehrere trommelförmige Scheiben zum Aufwickeln eines Kabels befinden, die beide motorisch angetrieben sind. Dieses Motorfahrzeug steht an dem einen Ende der Verlegungsstrecke. Am anderen Ende der Verlegungsstrecke ist eine Kabeltrommel aufgestellt, von welcher das Kabel mittels der Winde und des Zugseils in das Kabelschutzrohr eingezogen werden kann. Ferner sind noch am Eingang und am Ausgang des Kabelschutzrohrs Leitstücke und an der oberen Kante des Kabelschachtes Leitrollen vorgesehen, auf denen das Kabel lose aufliegt und vor Beschädigungen geschützt werden soll. Auch bei dieser Vorrichtung besteht ein Problem darin, daß es sehr schwierig ist, das Zugseil in das Kabelschutzrohr einzuführen. Da die Kabelkanäle bzw. Schutzrohre meist aus Rohrstücken oder Formsteinen zusammengesetzt sind und dadurch im Innern zahlreiche Kanten aufweisen, kann sich das Zugseil leicht verhaken oder verwinden, so daß es nur möglich ist, verhältnismäßig kurze Verlegungsstrecken zu überwinden. Es kommt hinzu, daß der Abstand von der Winde bis zum benachbarten Einlaß des Kabelschutzrohrs verhältnismäßig groß ist und das Zugseil auf diesem Wege völlig lose herabhängt, so daß man das Zugseil nur von Hand in das Kabelschutzrohr einschieben kann.

Des weiteren ist aus dem DE-GM 19 67 962 eine Vorrichtung zum Ausüben einer Zugwirkung auf durchlaufendes Gut in Gestalt von Kabeln, Schläuchen, Rohren, Bändern od. dgl. bekannt, wobei das Gut aus einem vorgeordneten Be- oder Verarbeitungsaggregat bzw. aus einer Extruderanlage oder einer Verseilmaschine ausläuft und wobei die Zugvorrichtung im wesentlichen aus zwei endlosen, gegeneinander anstellbaren, umlaufenden Bändern besteht, die das zu ziehende Gut im Reibungsschluß zwischen sich aufnehmen. Diese Vorrichtung dient also nur zum Ziehen beispielsweise von Kabeln in einer Richtung.

Eine weitere Vorrichtung ist aus GB 2 074 971 A bekannt. Diese Vorrichtung dient zum Aufwickeln eines aus einer Verlegungsstrecke gezogenen Zugkabels auf eine mittels Motor angetriebene Winde. Wenn die Winde auf einem Fahrzeug aufgestellt ist, so hat dieses aufgrund der sehr großen Zugkräfte, die von der Winde ausgeübt werden, die Tendenz, aufwärts und abwärts zu schwingen. Um diesen Nachteil zu beseitigen, ist ein Ständer über dem Schacht aufgestellt, von dem die Verlegungsstrecke ausgeht. Zwischen der mittels Motor betriebenen Winde und dem Ständer ist eine flexible Führung vorgesehen, die das Zugkabel in diesem Zwischenbereich umgibt. Der Zweck dieser flexiblen Führung ist, die Gegenkräfte gegen die von der Winde ausgeübten Zugkräfte auf den Ständer zu übertragen. Diese Gegenkräfte sind ausschließlich Druckkräfte. Nennenswerte Zugkräfte, die einem Ausweichen des Zugkabels beim Bewegen in entgegengesetzter Richtung entgegenwirken könnten, sind nicht übertragbar, da die flexible Führung aus einer Reihe von Formkörpern mit konkaven und konvexen Endflächen besteht, die aber nicht miteinander verbunden sind, sondern nur von einem gemeinsamen Schlauch aus Gummi od. dgl. umgeben sind. Der besagte Ständer besitzt keinen Antrieb, sondern nur eine Umlenkrolle am oberen Ende, um die das Zugkabel von einer im wesentlichen horizontalen Lage in eine im wesentlichen vertikale Lage umgelenkt wird. Für das herabhängende Zugkabel zwischen der Umlenkrolle des Ständers und dem Eingang in die Verlegungsstrecke ist keinerlei Führung vorhanden.

Ein Einschieben des Zugkabels in die Verlegungsstrecke ist mit dieser bekannten Vorrichtung nicht möglich.

Eine weitere Vorrichtung der hier in Betracht stehenden Gattung ist aus der US-A-3 971 544 bekannt. Auch hier befindet sich eine übliche Aufwickelvorrichtung für einen in eine Verlegungsstrecke einzuschiebenden biegsamen Stab auf einem Lastkraftwagen. Bei dieser Vorrichtung steht ein mittels Streben und Gelenken verstellbares Träger- und Führungsteil im Vordergrund, um die anfängliche Verschieberichtung des Stabes einstellen zu können. An dieses verstellbare Teil ist mittels Schnellverschluß eine schlauchartige Stabführung angeschlossen, die bis zum Eingang der Verlegungsstrecke verläuft, wobei auch dessen äußeres Ende mittels einer teleskopartigen Strebe verstellbar ist.

Aus der DE-U-77 30 332 ist ein höhenverstellbarer senkrechter Ständer bekannt, der zwischen beiderseitigen Widerlagern einspannbar ist. An dem Ständer ist eine einstellbare Umlenkvorrichtung für nur mit geringen Zugkräften belastbare, biegeempfindliche Kabel befestigt.

Der Erfindung liegt die Aufgabe zugrunde, eine Vorrichtung zu schaffen, die auch Schub- und Zugkräfte über lange Verlegungsstrecken zu übertragen gestaltet.

Die gestellte Aufgabe wird erfindungsgemäß dadurch gelöst, daß zwischen der Aufwickelvorrichtung und der Antriebsvorrichtung einerseits sowie der Antriebsvorrichtung und dem unmittelbaren Bereich des Endes der Verlegungsstrecke andererseits je eine biegsame, jedoch druck- und zugfeste Zwangsführung in Form eines Führungsschlauches für das Zugmittel vorgesehen ist, daß die Zwangsführungen an ihren Enden mittels Schnellverschlußkupplungen befestigbar sind, daß eine Schnellverschlußkupplung an dem Gestell des Haspelrades angebracht ist, und daß zwischen der Schnellverschlußkupplung und der Ab- bzw. Einlaufstelle des Zugmittels an dem Haspelrad eine feststehende Führung für das Zugmittel vorgesehen ist.

Vorteilhafte Ausgestaltungen der erfindungsgemäßen Vorrichtung ergeben sich aus den Unteransprüchen.

In den Zeichnungen sind Ausführungsbeispiele der erfindungsgemäßen Vorrichtung im Schema dargestellt, und zwar zeigen
Figur 1 eine Seitenansicht des größten Teils der Vorrichtung in Betriebsstellung mit vertikalem Schnitt durch eine Verlegungsstrecke,
Figur 2 eine Seitenansicht auf die Antriebsvorrichtung nach abgenommenem Deckel,
Figur 3 eine Draufsicht auf die Antriebsvorrichtung gemäß Figur 2,
Figur 4 eine vereinfachte Stirnansicht zu Figur 2,
Figur 5 eine Teilseitenansicht entsprechend Figur 2, jedoch in anderer Ausgestaltung,
Figur 6 eine Einzelheit in vergrößertem Maßstab,
Figur 7 eine Seitenansicht einer anderen Ausführung einer erfindungsgemäßen Vorrichtung,
Figur 8 eine Teildraufsicht auf einen Ausschnitt einer Vorrichtung im Zusammenhang mit Figur 7 in perspektivischer Darstellung,
Figur 9 eine Stirnansicht auf ein Führungsböckchen gemäß Figur 8,
Figur 10 eine Seitenansicht zu Figur 9 in Richtung des Pfeils X mit Darstellung zweier miteinander verbundener Führungsböckchen,
Figur 11 eine Stirnansicht entsprechend Figur 9 in einer anderen Ausführung und
Figur 12 eine Ansicht in Richtung des Pfeils XII in Figur 11.

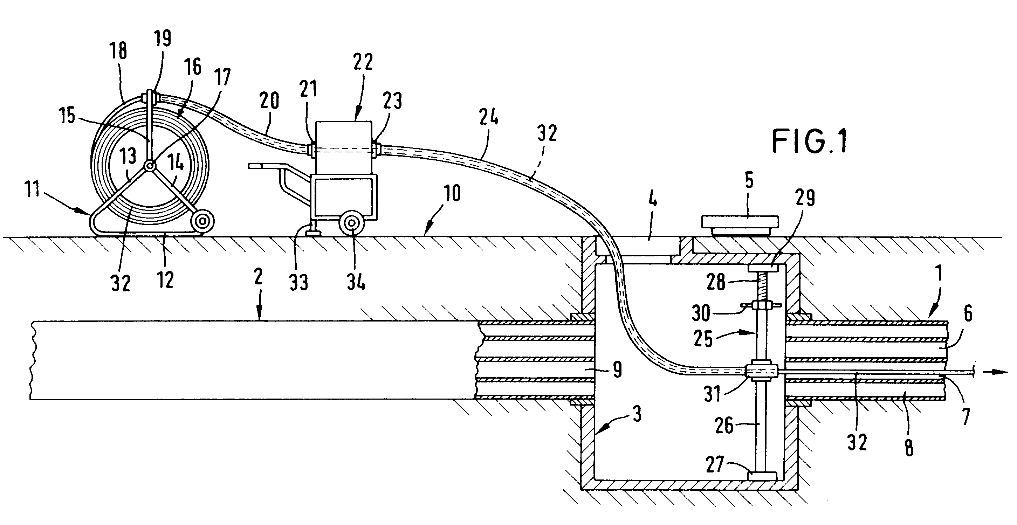

Figur 1 veranschaulicht ein Ausführungsbeispiel einer Vorrichtung zum Verlegen von Kabeln über eine Verlegungsstrecke 1 bzw. in Verlängerung hierzu über die Verlegungsstrecke 2, welche bei diesem Ausführungsbeispiel aus im Erdreich befindlichen Kabelschutzrohren oder -kanälen 6, 7, 8 oder 9 bestehen. Diese Verlegungsstrecken 1 und 2 sind, wie dargestellt, von einem Kabelschacht 3 zugänglich, und zwar durch den Schachteinstieg 4 nach Öffnen des Schachtdeckels 5. Auf der Erdoberfläche 10 mit Abstand von dem Schacht 3 steht eine Aufwickelvorrichtung mit einem Gestell 11. Dieses besteht aus zwei unteren auf dem Erdboden aufliegenden Bügeln 12, die mit Abstand voneinander und parallel zur Bildebene verlaufen. An diese Bügel 12 schließen sich radial verlaufende Schenkel 13 und 14 an, und zwar ebenfalls paarweise. Sie tragen ein senkrecht zur Bildebene verlaufendes Radlager 17 sowie einen etwa U-förmigen radial nach oben gerichteten Bügel 15. Auf dem Radlager 17 ist ein Haspelrad 16 drehbar gelagert. Im Innern des Haspelrades, und zwar nahe dessen äußerem Umfang ist ein Zugmittel 32 aufgewickelt, welches vorteilhafterweise aus einem flexiblen, biegsamen, zug- und druckfesten zylindrischen Stab besteht. An dem Bügel 15 ist eine gebogene feststehende Führung 18, beispielsweise in Gestalt eines Rohres angeordnet. Die Führung reicht bis zu einer Ab- bzw. Einlaufstelle des Zugmittels 32 an dem Haspelrad 16. Im äußeren Bereich des Bügels 15 ist eine Kupplung 19 für die Verbindung mit einem Führungsschlauch 20 vorgesehen. Dieser Führungsschlauch 20 bildet, ebenfalls wie der nachfolgend erläuterte Führungsschlauch 24 eine Zwangsführung für das Zugmittel 32. Das andere Ende des Führungsschlauches ist mit einer weiteren Kupplung 21 verbunden, die sich auf der einen Seite der Antriebsvorrichtung 22 befindet. Auf der gegenüberliegenden Seite der Antriebsvorrichtung 22 ist eine weitere Kupplung 23 für den besagten Führungsschlauch 24 angeordnet. Beide Führungsschläuche bestehen aus einem biegsamen, jedoch druck- und zugfesten Material. Die Kupplungen 19, 21 und 23 sind zweckmäßigerweise Schnellverschlußkupplungen, zum Beispiel mit Bajonett- bzw. Steckverschlüssen.

Mit möglichst geringem Abstand von dem Ende der Verlegungsstrecke 1 ist eine höhen- und seitenverstellbare Spannvorrichtung 25 mit einer Führungshülse 31 für das Zugmittel 32 angeordnet. An dieser Führungshülse 31 bzw. einem einfachen Rohrstutzen ist das benachbarte Ende des Führungsschlauches 24 angeschlossen, und zwar zweckmäßigerweise ebenfalls mittels einer Schnellverschlußkupplung, wodurch das Aufstellen und Einrichten der Vorrichtung wesentlich vereinfacht wird. Die Führungshülse 31 ist auf dem Ständerrohr 26 der Spannvorrichtung 25 höhenverstellbar, so daß der flexible Stab 32 wahlweise in eines der übereinander liegenden Kabelschutzrohre eingeschoben werden kann, im dargestellten Ausführungsbeispiel in das Kabelschutzrohr 7. Die Spannvorrichtung 25 kann auch vor dem Festspannen seitlich, das heißt in einer Ebene senkrecht zur Bildebene der Figur 1 verschoben aufgestellt werden, so daß weitere waagerecht nebeneinander liegende Kabelschutzrohre entsprechend bedient werden können. Die Spannvorrichtung 25 besteht somit aus einem vertikal zwischen Widerlagern einsetzbaren Ständerrohr, an dem die Führungshülse 31 wie gesagt verschiebbar angebracht ist. An dem einen stirnseitigen, in diesem Falle unteren Ende des Ständerrohres 26 ist eine Fußplatte 27 befestigt. An dem anderen oberen Ende des Ständerrohres ist eine durch Hand- oder Speichenrad 30 verstellbare Spindel 28 gelagert, an deren äußerem Ende eine Kopfplatte 29 angebracht ist. Je nach den gegebenen örtlichen Verhältnissen kann die Spannvorrichtung auch in anderer Stellung, beispielsweise in waagerechter Lage zwischen Widerlagern festgespannt werden. Durch diese vorbeschriebene Konstruktion hält das Zugmittel 32 von der Ab- bzw. Einlaufstelle des Zugmittels an dem Haspelrad 16 bis zu der Antriebsvorrichtung 22 und weiter von der Antriebsvorrichtung bis hin zu der Führungshülse 31 eine Zwangsführung, so daß sich das aus einem flexiblen Stab bestehende Zugmittel nur in dem von der Führung 18 und den Führungsschläuchen 20 und 24 vorgegebenen Bewegungsraum bewegen, nicht aber unkontrolliert nach außen ausweichen kann. Zum leichteren Transport ist die Antriebsvorrichtung 22 mit Rädern 34 ausgestattet, so daß sie nach Art einer Schubkarre verfahren werden kann. Im Betrieb wird sie jedoch von feststehenden Stützen 33 gehalten. An dem anderen nicht bezeichneten Ende der Verlängerungsstrecke 1 steht in bekannter Weise eine Kabeltrommel, von der nach Befestigen an dem äußeren Ende des Zugmittels 32 das Kabel abgezogen werden kann.

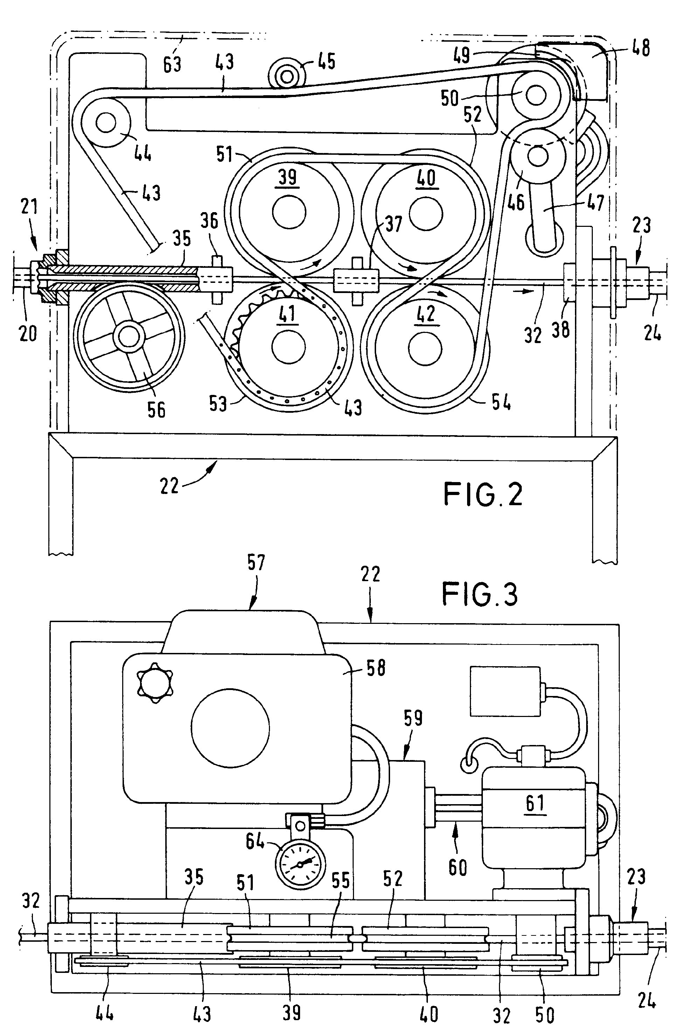

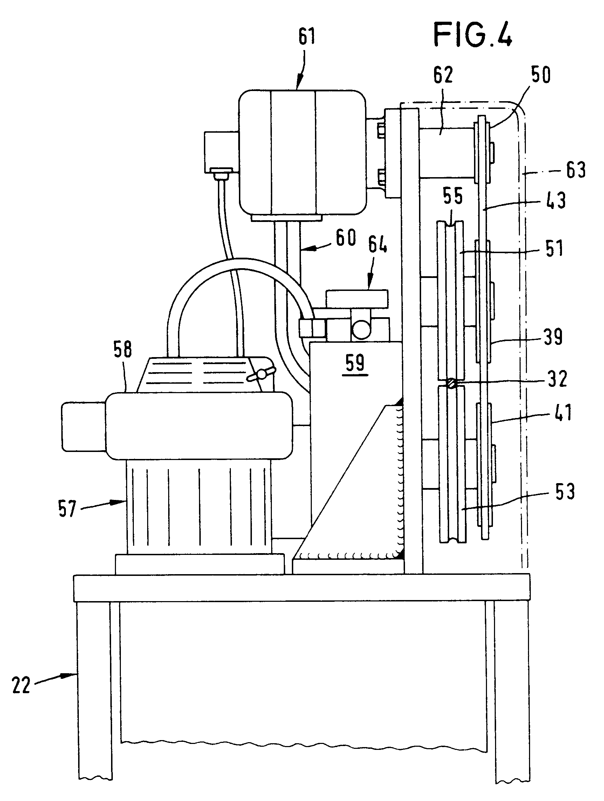

Die Figuren 2 bis 4 zeigen alle wesentlichen Teile der besonderen Konstruktion der Antriebsvorrichtung 22, und zwar weist diese eine Endloskette 43 auf, welche wechselseitig um zwei Zahnradpaare 39, 41 bzw. 40 und 42, ferner um ein Umlenkzahnrad 44 und ein Antriebszahnrad 50 geführt ist. Koaxial zu den Zahnradpaaren 39, 41 bzw. 40, 42 sind zwei Förderradpaare 51, 53 bzw. 52 und 54 angeordnet, wie insbesondere aus den Figuren 3 und 4 ersichtlich ist. Zwischen diesen Förderradpaaren ist das Zugmittel 32 entsprechend der gewählten Drehrichtung der Förderräder bewegbar. Damit das Zugmittel zwischen den Förderrädern genau erfaßt und geführt ist und auch mit Sicherheit mitgenommen wird, sind auf dem Umfang der Förderräder Rillen 55 vorgesehen, die formmäßig dem flexiblen Stab angepaßt sind.

An dem Trum der Endloskette 43 zwischen dem Umlenkzahnrad 44 und dem Antriebszahnrad 50 greift ein Andrückzahnrad 45 an, um in diesem Bereich eine zusätzliche Führung für die Endloskette zu erhalten. Das erforderliche Spannen der Endloskette erfolgt durch ein Spannrad 46, welches nahe dem Antriebszahnrad 50 an der Endloskette 43 angreift. Das Spannrad 46 ist dabei zweckmäßig an einem verstellbaren und feststellbaren Hebelarm 47 gelagert. Um mit Sicherheit zu verhindern, daß sich die Endloskette von dem Antriebszahnrad 50 löst bzw. von diesem abspringt, ist in dem Umlenkbereich ein Führungsklotz 48 vorgesehen, der die Endloskette in diesem Umlenkbereich mit einem Gleitschuh 49 umfaßt.

Um auch im Bereich der Antriebsvorrichtung 22 ein Ausweichen bzw. ein unerwünschtes Ausbiegen des Zugmittels 32 zu vermeiden, ist im Anschluß an die beschriebene Schnellverschlußkupplung 21 eingangsseitig der Antriebsvorrichtung 22 ein in diese hineinragendes Führungsrohr 35 befestigt, das am inneren Ende zusätzlich von einem Haltesteg 36 gehalten ist. Ferner ist im Bereich zwischen den Förderradpaaren 51, 53 bzw. 52 und 54 ein Zwischenführungsrohr 37 ebenfalls mit einem Haltesteg angeordnet. Ausgangsseitig, das heißt im rechten Teil der Figur 2 ist ein weiteres Führungsrohr 38 vorgesehen, das ebenso wie das Führungsrohr 35 in das Innere der Antriebsvorrichtung hineinragen kann.

Damit die erfindungsgemäße Vorrichtung völlig unabhängig von Netzstrom arbeiten kann, der ohnehin bei den meisten Verlegungsstrecken nicht vorhanden ist, ist eine besondere Antriebsart vorgesehen. Die Welle des Antriebszahnrades 50 ist mit einem Hydraulikmotor 61 verbunden, der von einer Hydraulikpumpe 59 gespeist ist, die ihrerseits von einem Verbrennungsmotor 57 angetrieben ist. Derartige Antriebskombinationen sind zwar aus anderen Fachbereichen bzw. Anwendungsgebieten an sich bekannt, bieten aber im vorliegenden Fall den Vorteil einer besonders guten Regelbarkeit mit hoher Durchzugskraft und vor allem einem großen Drehmoment. Mit dem Bezugszeichen 56 ist ein Einstellrad und mit 58 der Brennstofftank bezeichnet. Die Druckflüssigkeitsleitungen 60, das Druckmeßgerät 64 und das Achslager 62 sind nur beispielsweise Einzelteile der insgesamt vereinfacht dargestellten Antriebsvorrichtung. Alle wichtigen beweglichen Teile der Antriebsvorrichtung sind leicht zugänglich nach Abnahme des strichpunktiert gezeichneten Deckels 63, sind aber im Betriebszustand durch diesen Deckel geschützt.

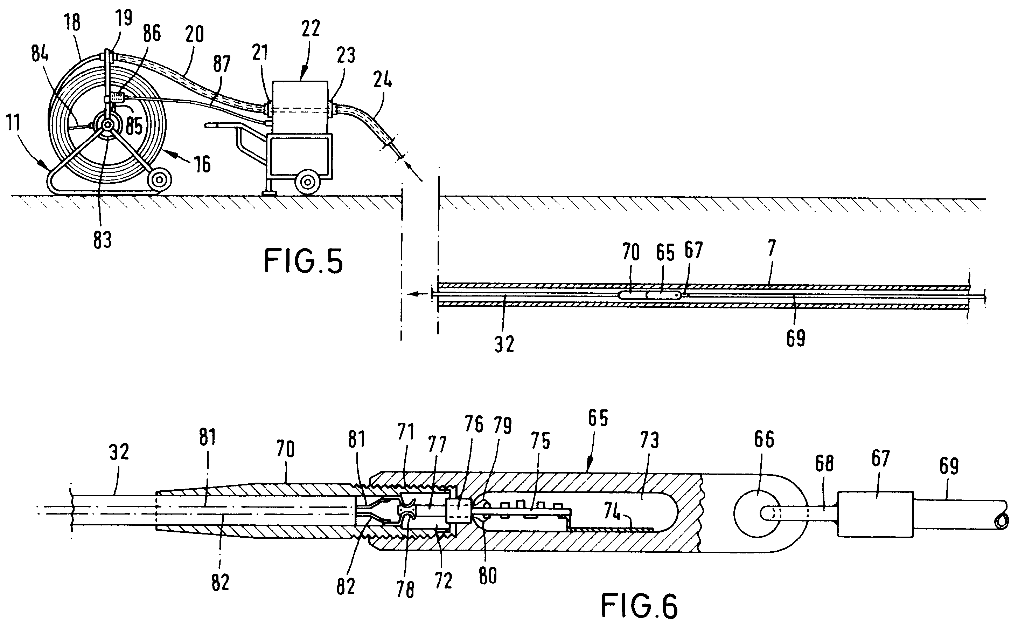

Die Figuren 5 und 6 zeigen eine besonders vorteilhafte Ausgestaltung der erfindungsgemäßen Vorrichtung, wodurch einmal die jeweilige Zug- oder Druckbelastung des flexiblen Stabes 32 und des einzuziehenden Kabels überwacht bzw. kontrolliert werden kann und wodurch zum anderen unzulässig hohe Belastungen vermieden werden können. Wenn ein flexibler Stab 32 an irgendeiner Stelle der bis zu eintausend Meter und darüber reichenden Verlegungsstrecke wegen unzulässig hoher Belastung reißen oder brechen sollte, so wäre dieser Schaden nur mit außerordentlich hohem Aufwand wieder zu beseitigen. Bei Kabeln könnte ein noch größerer Schaden entstehen, weil deren zuverlässige Arbeitsweise wesentlich davon abhängt, daß sie keinerlei Beschädigung erfahren, sowohl was die Übertragung der elektrischen Ströme anbetrifft als auch die Dichtigkeit gegen Eindringen von Wasser oder Schmutz. Aus diesem Grunde ist am äußeren Ende des als Stab ausgebildeten Zugmittels 32 ein Zugmeßkopf 65 befestigt, an dem dann das zu verlegende Kabel 69 befestigbar ist. Die Befestigung des Kabels erfolgt vorzugsweise durch ein Anschlußstück 67, an dem eine Metallöse 68 sitzt, die in eine Bohrung 66 des Zugmeßkopfes 65 eingreift. Der Zugmeßkopf 65 weist einen Hohlraum 73 auf, an dessen Wandung ein Dehnungsmeßstreifen 74 angebracht ist, welcher seinerseits mit einer Verstärker-Elektronik 75 zusammenwirkt. Die Verstärker-Elektronik 75 ist über elektrische Leitungen 79 und 80 sowie Kupferadern 81 und 82, die sich über die gesamte Länge des Stabes 32 erstrecken, mit einem elektronischen Auswerter 86 (Figur 5) verbunden. Dabei sind die elektrischen Leitungen 79, 80 mit einem in dem Zugmeßkopf 65 angeordneten Klinkenstecker 77 und die Kupferadern 81 und 82 mit einer Klinkenkupplung 78 verbunden. Der Klinkenstecker ist in einem Halter 76 befestigt. Es versteht sich, daß geeignete elektrische Isolierungen sowohl für die elektrischen Leitungen und Kupferadern als auch innerhalb des Klinkensteckers und der Klinkenkupplung vorgesehen sind. Die Klinkenkupplung 78 ist in der Verbindungshülse 70 befestigt, die einerseits mit dem Ende des Stabes 32 fest verbunden und andererseits mittels eines Gewindes 71 an dem Zugmeßkopf 65 angebracht ist. Der Zugmeßkopf erhält zu diesem Zweck eine stirnseitige Gewindebohrung 72. Wie Figur 5 veranschaulicht, erfolgt die elektrische Verbindung der Kupferadern 81 und 82 zwischen dem in dem Haspelrad 16 der Aufwickelvorrichtung befindlichen Ende des Stabes 32 und dem elektronischen Auswerter 86 mittels eines Schleifringkörpers 83. Die dazu erforderliche elektrische Verbindung 84 sowie der Anschluß 85 sind der besseren Verdeutlichung wegen vereinfacht dargestellt. Der elektronische Auswerter 86 ist vorteilhafterweise mit einer nicht gezeichneten Steuerung der Antriebsvorrichtung 22 verbunden. Die elektrische Verbindung zur Steuerung ist vereinfacht bei Bezugszeichen 87 dargestellt. Die Einrichtung ist vorteilhafterweise so ausgestattet, daß während des gesamten Betriebes vor allem die jeweiligen Zugwerte ständig angezeigt und/oder fortlaufend aufgezeichnet werden. Dies kann durch Anzeigegeräte, Meßschreiber od. dgl. Geräte erfolgen. Bei Annäherung an einen unzulässig hohen Grenzbereich, der für jede Kabelart unterschiedlich vorgegeben sein kann, schaltet die Maschine automatisch ab, wobei gegebenenfalls ein Warnlicht oder Warntonsignal ausgegeben wird.

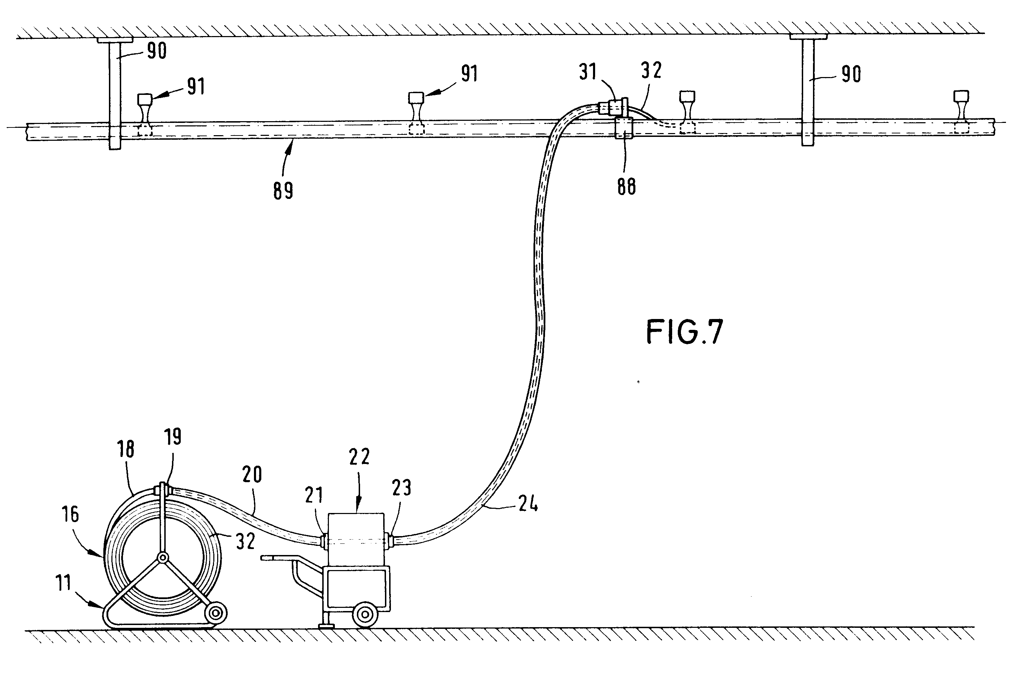

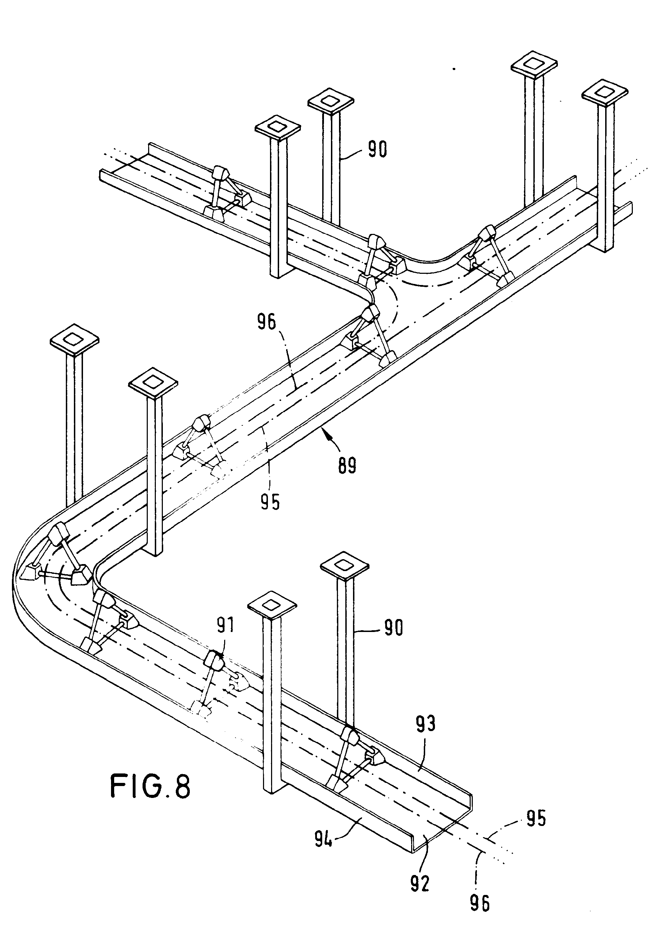

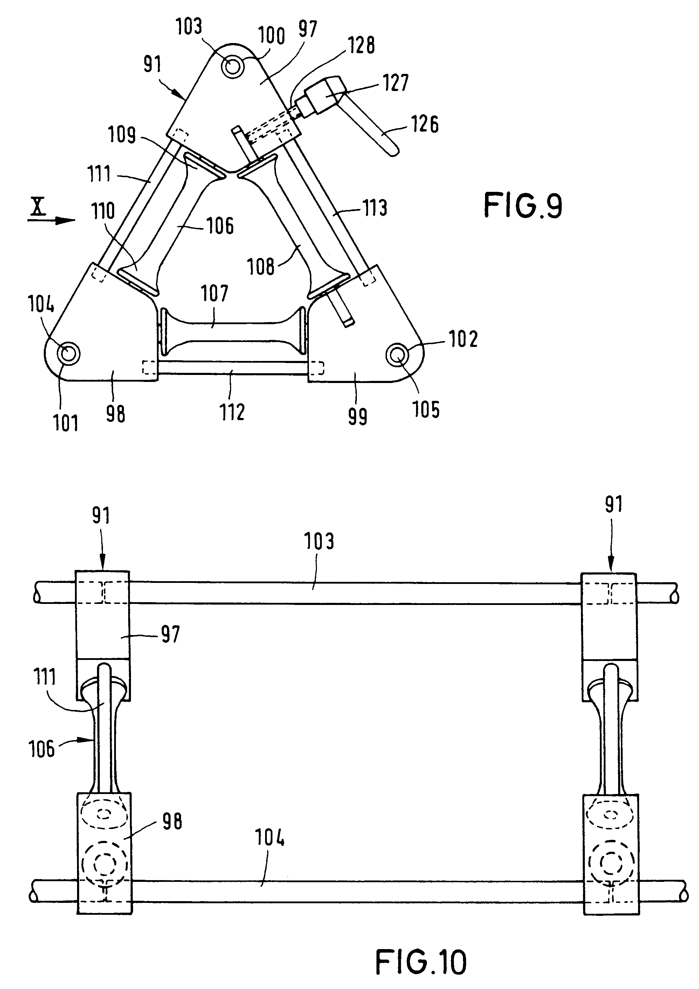

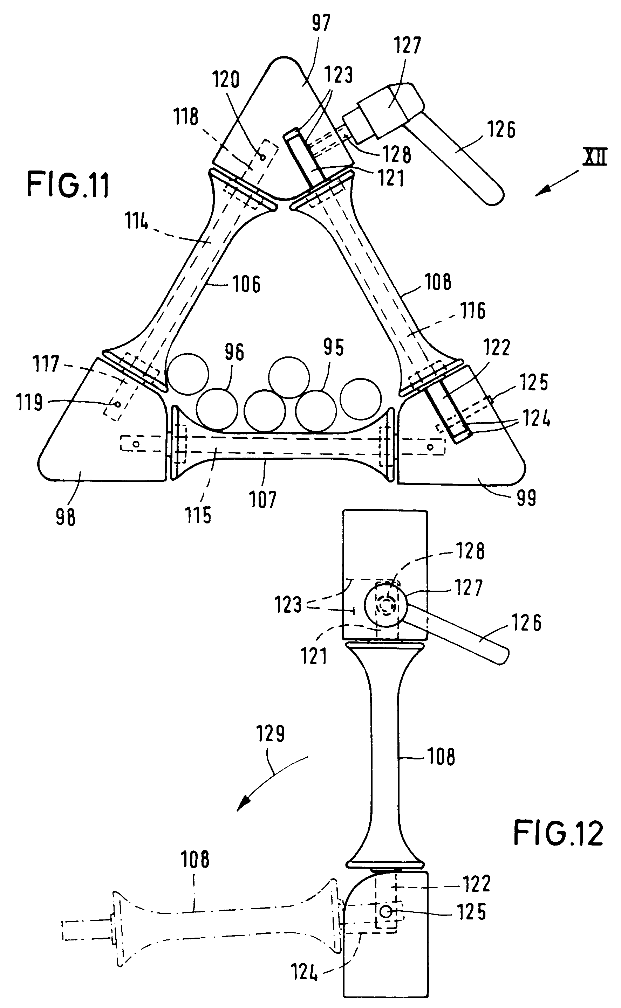

Die Figuren 7 bis 12 veranschaulichen ein anderes Ausführungsbeispiel der erfindungsgemäßen Vorrichtung, wobei die Verlegungsstrecke aus unter Gebäudedecken oder Dächern od. dgl.aufgehängten U-förmigen Kabelrinnen 89 mit jeweils einem Rinnenbogen 92 und Seitenrändern 93 und 94 besteht. Derartige Verlegungsstrecken werden vielfach in Großbetrieben dazu benutzt, große Computer-Anlagen durch Kabel miteinander zu verbinden, beispielsweise einen oder mehrere Großrechner in Netzwerken od. dgl. mit zahlreichen Terminals. Bei dem in Figur 7 dargestellten Ausführungsbeispiel entspricht der linke untere Teil der Vorrichtung mit einer Aufwickelvorrichtung und einer Antriebsvorrichtung für ein Zugmittel im wesentlichen den Vorrichtungsteilen nach Figur 1, so daß für gleiche Teile auch die gleichen Bezugszeichen verwendet worden sind. In diesem Fall ist die Führungshülse 31 bzw. eine Schnellverschlußkupplung an einem Halter 88 an einer geeigneten Stelle einer Kabelrinne 89 angebracht. Die Kabelrinne selbst hängt beispielsweise an Haltestäben 90 oder an entsprechenden Rahmenkonstruktionen, wie sie in Figur 8 ersichtlich sind. In den Kabelrinnen 89, die beliebige Bögen oder Abzweigungen aufweisen können, sind mit Abstand voneinander Führungsböckchen 91 für die Aufnahme eines oder mehrerer Kabel, zum Beispiel der Kabel 95 und 96 aufgestellt. Die Führungsböckchen 91 sind in Form von gleichschenkeligen Dreiecken aufgebaut, wobei sie so aufgestellt sind, daß eine Ecke frei nach oben ragt, während die beiden anderen Ecken auf dem Rinnenboden aufliegen. Die Ecken bestehen aus Eckklötzen 97, 98 und 99 (Figur 9), zwischen welchen Führungsrollen 106, 107 und 108 leicht drehbar gelagert sind. Zur Schonung und leichteren Umlenkung von Kabeln um Bögen oder Ecken der Kabelrinnen weisen die Führungsrollen 106, 107 und 108 nach ihren Enden zu konische Erweiterungen 109 und 110 auf, die im Zusammenspiel mit den jeweils benachbarten Führungsrollen keine Beschädigung der Kabel zulassen, wie insbesondere aus den Figuren 9 und 11 ersichtlich ist. Zweckmäßigerweise besitzen die Eckklötze 97, 98 und 99 Bohrungen 100, 101 und 102 zur Aufnahme von Verbindungsstangen 103, 104 und 105 zwischen den jeweils benachbarten Führungsböckchen. Insgesamt ergibt sich somit eine stabile kabelschonende Verlegungsstrecke, die sehr einfach montierbar ist, weil sich die Führungsböckchen gewissermaßen in einem Gerüst gegenseitig halten und im allgemeinen keine zusätzliche Verbindung mit der Kabelrinne erforderlich ist, mit Ausnahme im Bereich von Bögen und Ecken. Wenn es sich um schwere Kabel handelt, die verlegt werden müssen, ist es zweckmäßig, die Führungsböckchen 51 zu verstärken, um die Drehachsen der Führungsrollen zu entlasten. Aus diesem Grunde sind zwischen den Eckklötzen 97, 98 und 99 eines Führungsböckchens 91 Verstärkungsstangen 111, 112 und 113 außerhalb und parallel zu den Drehachsen der Führungsrollen 106, 107 und 108 befestigt, so wie es in Figur 9 dargestellt ist.

Die Figuren 11 und 12 zeigen eine vereinfachte Ausgestaltung eines Führungsböckchens, die vor allem für leichtere Kabel oder auch für Schläuche oder anderes Strangmaterial vorgesehen ist. Dabei sind die beiden Achsen 114 und 115 mit ihren entsprechenden Enden 117 und 118 in entsprechenden Bohrungen der Eckklötze 97, 98 und 99 eingefügt und durch Querstifte 119 und 120 gehalten. Die Führungsrollen sitzen, zweckmäßigerweise unter Zwischenschaltung von Kugellagern oder anderen Wälzlagern, leicht drehbar auf diesen Achsen. Vorteilhafterweise ist jedoch die dritte Führungsrolle 108 mit ihrer Achse 116 schwenkbar bzw. herausklappbar gelagert. Eine einfache Konstruktion ergibt sich dadurch, daß in den benachbarten zwei Eckklötzen 97 und 99 Schlitze 123 und 124 zur Aufnahme der Enden 121 und 122 der Achse 116 dieser Führungsrolle 108 eingearbeitet sind. Die Schlitze stehen senkrecht zur Bildebene der Figuren 9 und 11 bzw. zur Dreiecksfläche der Führungsböckchen. Das eine Achsenende 122 ist von einem Schwenkbolzen 125 und das andere Achsende 121 von einem Schraubenbolzen 128 in Verriegelungsstellung gemäß den Figuren 9 und 11 gehalten. Der Schraubenbolzen 128 ist mittels Griffkopf 127 und Handgriff 126 lösbar. Nach dem Lösen des Schraubenbolzens 128 kann die Führungsrolle in Richtung des Pfeiles 129 (Figur 12) in die strichpunktiert gezeichnete Lage geschwenkt bzw. ausgeklappt werden. Diese Konstruktion hat den Vorteil, daß man nach dem einseitigen Öffnen der Führungsböckchen auch Kabel von der Seite her in die entsprechende Verlegungsstrecke einlegen oder auch herausnehmen kann. Dies ist besonders wichtig, wenn zum Beispiel nachträglich noch ein oder mehrere Kabel zusätzlich zu den bereits vorhandenen eingebracht werden sollen oder wenn beispielsweise ein Kabel gegen ein anderes ausgetauscht werden soll. Das gilt auch für den Fall, daß irgendwelche Änderungen an Kabeln nur über einen Teilbereich der Verlegungsstrecke vorgenommen werden sollen. Besonders bei leichteren Kabeln oder bei guter Zugänglichkeit zu dem Kabelrinnen, insbesondere bei geringer Höhe, kann dann die gesamte Kabelverlegung auch auf diese Weise erfolgen, ohne daß es des Einsatzes einer Antriebsvorrichtung bedarf. Die Führungsböckchen bringen dann aber auf jeden Fall den Vorteil mit sich, daß man die Kabel letztlich in Längsrichtung verschieben und genau ausrichten kann. Es versteht sich, daß nach Ausführung dieser entsprechenden Arbeiten die Führungsrollen 108 dann jeweils wieder in ihre Betriebsstellung zurückgebracht und arretiert werden.

Eine weitere vorteilhafte Ausgestaltung der erfindungsgemäßen Vorrichtung ist noch darin zu sehen, daß das äußere Ende des Zugmittels 32 mit einem Kopf ausgestattet ist, der eine optische Einrichtung aufweist, die derart gestaltet ist, daß die optischen Signale entweder über Glasfaserkabel oder durch digitale Auswertung durch das Zugmittel bis außerhalb der Verlegungsstrecke übertragbar sind. Diese Ausgestaltung ist besonders dann hilfreich, wenn in irgendeiner Verlegungsstrecke Widerstände auftreten und man erkennen möchte, welcher Art diese Widerstände sind, ob es sich beispielsweise um Verstopfungen, scharfe Bögen od. dgl.in der Verlegungsstrecke handelt. Eine solche Durchleuchtung der gesamten Verlegungsstrecke kann auch dazu dienen, den ordnungsgemäßen Zustand verlegter Kabel zu kontrollieren oder von Zeit zu Zeit zu überwachen. Eine solche optische Vorrichtung kann auch mit geeigneten Widergabegeräten oder Aufzeichnungsgeräten ausgestattet werden.

## Patentansprüche

1. Vorrichtung zum Verlegen von Kabeln oder flexiblen Rohren über eine Verlegungsstrecke mit einer Aufwickelvorrichtung (11, 16) und einer Antriebsvorrichtung (22) für ein Zugmittel (32) an dem einen Ende der Verlegungsstrecke und mit einer Kabeltrommel an dem anderen Ende der Verlegungsstrecke, wobei die Aufwickelvorrichtung ein Gestell (11) mit einem Haspelrad (16) aufweist und wobei zwischen der Antriebsvorrichtung (22) und dem benachbarten Ende der Verlegungsstrecke eine Führung vorgesehen ist, dadurch gekennzeichnet, daß zwischen der Aufwickelvorrichtung (11, 16) und der Antriebsvorrichtung (22) einerseits sowie der Antriebsvorrichtung (22) und dem unmittelbaren Bereich des Endes der Verlegungsstrecke (1) andererseits je eine biegsame, jedoch druck- und zugfeste Zwangsführung (20, 24) in Form eines Führungsschlauches für das Zugmittel (32) vorgesehen ist, daß die Zwangsführungen (20, 24) an ihren Enden mittels Schnellverschlußkupplungen (19, 21, 23) befestigbar sind, daß eine Schnellverschlußkupplung (19) an dem Gestell (11) des Haspelrades (16) angebracht ist, und daß zwischen der Schnellverschlußkupplung (19) und der Ab- bzw. Einlaufstelle des Zugmittels an dem Haspelrad (16) eine feststehende Führung (18) für das Zugmittel (32) vorgesehen ist.

2. Vorrichtung nach Anspruch 1, dadurch gekennzeichnet, daß mit möglichst geringem Abstand von dem Ende der Verlegungsstrecke (1) eine höhen- und seitenverstellbare Spannvorrichtung (25) mit einer Führungshülse (31) für das Zugmittel (32) angeordnet ist, und das an die Führungshülse (31) das benachbarte Ende des Führungsschlauches (24) angeschlossen ist.

3. Vorrichtung nach Anspruch 2, dadurch gekennzeichnet, daß die Spannvorrichtung (25) ein vertikal oder horizontal zwischen Widerlagern einsetzbares Ständerrohr (26) aufweist, an dem die Führungshülse (31) verschiebbar angebracht ist, daß an dem einen stirnseitigen Ende des Ständerrohres (26) eine Fußplatte (27) befestigt ist, und daß an dem anderen Ende des Ständerrohres (26) eine durch Hand- oder Speichenrad (30) verstellbare Spindel (28) gelagert ist, an deren äußerem Ende eine Kopfplatte (29) angebracht ist.

4. Vorrichtung nach einem der vorhergehenden Ansprüche, dadurch gekennzeichnet, daß die Antriebsvorrichtung (22) eine Endloskette (43) aufweist, welche wechselseitig um zwei Zahnradpaare (39, 41; 40, 42), um ein Umlenkzahnrad (44) und ein Antriebszahnrad (50) geführt ist, und daß koaxial zu den Zahnradpaaren (39, 41; 40, 42) zwei Förderradpaare (51, 53; 52, 54) angeordnet sind, zwischen welchen das Zugmittel (32) entsprechend der Drehrichtung der Förderräder bewegbar ist.

5. Vorrichtung nach Anspruch 4, dadurch gekennzeichnet, daß an dem Trum der Endloskette (43) zwischen dem Umlenkzahnrad (44) und dem Antriebszahnrad (50) ein Andrückzahnrad (45) angreift.

6. Vorrichtung nach Anspruch 4 oder 6, dadurch gekennzeichnet, daß nahe dem Antriebszahnrad (50) ein Spannrad (46) an der Endloskette (43) angreift, und daß das Spannrad (46) an einem verstellbaren und feststellbaren Hebelarm (47) gelagert ist.

7. Vorrichtung nach einem der Ansprüche 4 bis 6, dadurch gekennzeichnet, daß die Endloskette (43) im Umlenkbereich des Antriebszahnrades (50) von einem Führungsklotz (48) mit einem Gleitschuh (49) umfaßt ist.

8. Vorrichtung nach einem der Ansprüche 4 bis 7, dadurch gekennzeichnet, daß das Zugmittel (32) aus einem flexiblen, biegsamen, zug- und druckfesten zylindrischen Stab besteht, und daß auf dem Umfang der Förderräder (51, 52, 53, 54) Rillen (55) vorgesehen sind, die formmäßig dem Stab angepaßt sind.

9. Vorrichtung nach einem der vorhergehenden Ansprüche, dadurch gekennzeichnet, daß im Anschluß an die Schnellverschlußkupplung (21) eingangsseitig der Antriebsvorrichtung (22) ein in diese hineinragendes Führungsrohr (35) befestigt ist.

10. Vorrichtung nach einem der Ansprüche 4 bis 9, dadurch gekennzeichnet, daß im Bereich zwischen den Förderradpaaren (51, 53; 52, 54) ein Zwischenführungsrohr (37) angeordnet ist.

11. Vorrichtung nach einem der Ansprüche 4 bis 10, dadurch gekennzeichnet, daß mit der Welle des Antriebszahnrades (50) ein Hydraulikmotor (61) verbunden ist, der von einer Hydraulikpumpe (59) gespeist ist, und daß die Hydraulikpumpe (59) von einem Verbrennungsmotor (57) angetrieben ist.

12. Vorrichtung nach einem der vorhergehenden Ansprüche, dadurch gekennzeichnet, daß am äußeren Ende des als Stab ausgebildeten Zugmittels (32) ein Zugmeßkopf (65) befestigt ist, an dem das zu verlegende Kabel (69) befestigbar ist.

13. Vorrichtung nach Anspruch 12, dadurch gekennzeichnet, daß der Zugmeßkopf (65) einen Hohlraum (73) aufweist, an dessen Wandung ein Dehnungsmeßstreifen (74) angebracht ist, welcher mit einer Verstärker-Elektronik (75) zusammenwirkt.

14. Vorrichtung nach Anspruch 13, dadurch gekennzeichnet, daß die Verstärker-Elektronik (75) über elektrische Leitungen (79, 80) sowie Kupferadern (81, 82), die sich über die gesamte Lange des Stabes (32) erstrecken, mit einem elektronischen Auswerter (86) verbunden ist.

15. Vorrichtung nach Anspruch 14, dadurch gekennzeichnet, daß die elektrischen Leitungen (79, 80) mit einem in dem Zugmeßkopf (65) angeordneten Klinkenstecker (77) und die Kupferadern (81, 82) mit einer Klinkenkupplung (78) verbunden sind, und daß die Klinkenkupplung (78) in einer Verbindungshülse (70) befestigt ist, die einerseits mit dem Ende des Stabes (32) fest verbunden und andererseits mittels eines Gewindes (71) an dem Zugmeßkopf (65) angebracht ist.

16. Vorrichtung nach Anspruch 14 oder 15, dadurch gekennzeichnet, daß die elektrische Verbindung der Kupferadern (81, 82) zwischen dem in dem Haspelrad (16) der Aufwickelvorrichtung befindlichen Ende des Stabes (32) und dem elektronischen Auswerter (86) mittels eines Schleifringkörpers (83) erfolgt.

17. Vorrichtung nach einem der Ansprüche 12 bis 16, dadurch gekennzeichnet, daß der elektronische Auswerter (86) mit einer Steuerung der Antriebsvorrichtung (22) verbunden ist.

18. Vorrichtung nach einem der vorhergehenden Ansprüche, dadurch gekennzeichnet, daß die Verlegungsstrecke (1) aus im Erdreich befindlichen Kabelschutzrohren oder -kanälen (6 bis 9) besteht, die von Kabelschächten (3) zugänglich sind.

19. Vorrichtung nach einem der Ansprüche 1 bis 17, dadurch gekennzeichnet, daß die Verlegungsstrecke aus unter Gebäudedecken aufgehängten U-förmigen Kabelrinnen (89) mit jeweils einen Rinnenboden (92) und Seitenrändern (93, 94) besteht.

20. Vorrichtung nach Anspruch 19, dadurch gekennzeichnet, daß in den Kabelrinnen (89) mit Abstand voneinander Führungsböckchen (91) für die Aufnahme eines oder mehrerer Kabel (95, 96) aufgestellt sind.

21. Vorrichtung nach Anspruch 20, dadurch gekennzeichnet, daß die Führungsböckchen (91) in Form von gleichschenkeligen Dreiecken aufgebaut sind, deren Ecken aus Eckklötzen (97, 98, 99) bestehen, zwischen welchen Führungsrollen (106, 107, 108) leicht drehbar gelagert sind.

22. Vorrichtung nach Anspruch 21, dadurch gekennzeichnet, daß die Führungsrollen (106, 107, 108) nach ihren Enden zu konische Erweiterungen (109, 110) aufweisen.

23. Vorrichtung nach Anspruch 21 oder 22, dadurch gekennzeichnet, daß die Eckklötze (97, 98, 99) Bohrungen (100, 101, 102) zur Aufnahme von Verbindungsstangen (103, 104, 105) zwischen benachbarten Führungsböckchen (91) aufweisen.

24. Vorrichtung nach einem der Ansprüche 21 bis 23, dadurch gekennzeichnet, daß zwischen den Eckklötzen (97, 98, 99) eines Führungsböckchens (91) Verstärkungsstangen (111, 112, 113) außerhalb und parallel zu den Drehachsen der Führungsrollen (106, 107, 108) befestigt sind.

25. Vorrichtung nach einem der Ansprüche 21 bis 24, dadurch gekennzeichnet, daß eine Führungsrolle (108) jedes Führungsböckchens (91) schwenkbar bzw. herausklappbar gelagert ist.

26. Vorrichtung nach Anspruch 25, dadurch gekennzeichnet, daß in zwei Eckklötzen (97) Schlitze (123, 124) zur Aufnahme der Enden (121, 122) der Achse (116) der Führungsrolle (108) eingearbeitet sind, die senkrecht zur Dreiecksfläche verlaufen, daß das eine Achsende (122) von einem Schwenkbolzen (125) und das andere Achsende (121) von einem Schraubenbolzen (128) in Verriegelungsstellung gehalten sind, und daß der Schraubenbolzen (128) mittels Griffkopf (127) und Handgriff (126) lösbar ist.

27. Vorrichtung nach einem der vorhergehenden Ansprüche, dadurch gekennzeichnet, daß das äußere Ende des Zugmittels (32) mit einem Kopf versehen ist, der eine optische Einrichtung aufweist, die derart gestaltet ist, daß die optischen Signale über Glasfaserkabel oder digitale Auswertung durch das Zugmittel bis außerhalb der Verlegungsstrecke übertragbar sind.

## Claims

1. Apparatus for laying cables or flexible conduits over a laying segment with an unwinding device (11, 16) and a driving device (22) for pulling means (32) at one end of the laying segment and with a cable drum at the other end of the laying segment, the unwinding device comprising a frame (11) with a reel wheel (16) and provided between the driving device (22) and the adjacent end of the laying segment is a guide, characterised in that provided between the unwinding device (11, 16) and the driving device (22) on the one hand as well as the driving device (22) and the immediate region of the end of the laying segment (1) on the other hand is in each case a flexible, but compression-resistant and tension-proof guide member (20, 24) in the form of a guide hose for the pulling means (32), that the guide means (20, 24) can be attached at their ends by means of quick-release couplings (19, 21, 23), that a quick-release coupling (19) is located on the frame (11) of the reel wheel (16) and that provided between the quick-release coupling (19) and the delivery or inlet point of the pulling means on the reel wheel (16) is a stationary guide (18) for the pulling means (32).

2. Apparatus according to Claim 1, characterised in that located at the shortest possible distance from the end of the laying segment (1) is a vertically adjustable and laterally adjustable clamping device (25) with a guide sleeve (31) for the pulling means (32) and that connected to the guide sleeve (31) is the adjacent end of the guide hose (24).

3. Apparatus according to Claim 2, characterised in that the clamping device (25) comprises an upright tube (26) able to be inserted vertically or horizontally between abutments, on which tube (26) the guide sleeve (31) is arranged to slide, that attached to one front end of the upright tube (26) is a base plate (27) and that mounted on the other end of the upright tube (26) is a spindle (28) able to adjusted by a hand wheel or spoked wheel (30), on the outer end of which spindle a head plate (29) is located.

4. Apparatus according to one of the preceding Claims, characterised in that the driving device (22) comprises an endless chain (43), which is guided alternately around two pairs of sprockets (39, 41; 40, 42), around a guide sprocket (44) and a drive sprocket (50), and that located coaxially to the pairs of sprockets (39, 41; 40, 42) are two pairs of conveying wheels (51, 53; 52, 54), between which the pulling means (32) are able to move in accordance with the direction of rotation of the conveying wheels.

5. Apparatus according to Claim 4, characterised in that a pressing sprocket (45) engages on the side of the endless chain (43) between the guide sprocket (44) and the drive sprocket (50).

6. Apparatus according to Claim 4 or 5, characterised in that close to the drive sprocket (50), a clamping wheel (46) engages on the endless chain (43) and that the clamping wheel (46) is mounted on a lever arm (47) which can be adjusted and locked in position.

7. Apparatus according to one of Claims 4 to 6, characterised in that in the deflection region of the drive sprocket (50), the endless chain (43) is enclosed by a guide block (48) with a sliding shoe (49).

8. Apparatus according to one of Claims 4 to 7, characterised in that the pulling means (32) consist of a flexible, bendable, tension-proof and compression resistant cylindrical rod, and that provided on the periphery of the conveying wheels (51, 52, 53, 54) are grooves (55), which are adapted to the rod as regards shape.

9. Apparatus according to one of the preceding Claims, characterised in that attached adjoining the quick-release coupling (21) on the inlet side of the driving device (22) is a guide tube (35) projecting into the latter.

10. Apparatus according to one of Claims 4 to 9, characterised in that an intermediate guide tube (37) is located in the region between the pairs of conveying wheels (51, 53; 52, 54).

11. Apparatus according to one of Claims 4 to 10, characterised in that connected to the shaft of the drive sprocket (50) is a hydraulic motor (61), which is supplied by a hydraulic pump (59) and that the hydraulic pump (59) is driven by an internal combustion engine (57).

12. Apparatus according to one of the preceding Claims, characterised in that attached to the outer end of the pulling means (32) constructed as a rod is a traction measuring head (65), to which the cable (69) to be laid can be attached.

13. Apparatus according to Claim 12, characterised in that the traction measuring head (65) comprises a cavity (73), located on the wall of which is a wire strain gauge (74), which cooperates with amplifying electronics (75).

14. Apparatus according to Claim 13, characterised in that the amplifying electronics (75) are connected by way of electrical leads (79, 80) and copper wires (81, 82), which extend over the entire length of the rod (32), to an electronic evaluator (86).

15. Apparatus according to Claim 14, characterised in that the electrical leads (79, 80) are connected to a jack (77) located in the traction measuring head (65) and the copper wires (81, 82) are connected to a pawl coupling (78), and that the pawl coupling (78) is attached in a connecting sleeve (70), which at one side is securely connected to the end of the rod (32) and at the other side is located by means of a screw thread (71) on the traction measuring head (65).

16. Apparatus according to Claim 14 or 15, characterised in that the electrical connection of the copper wires (81, 82) between the end of the rod (32) located in the reel wheel (16) of the unwinding device and the electronic evaluator (86) takes place by means of a slip-ring member (83).

17. Apparatus according to one of Claims 12 to 16, characterised in that the electronic evaluator (86) is connected to a control arrangement of the driving device (22).

18. Apparatus according to one of the preceding Claims, characterised in that the laying segment (1) consists of cable-protection pipes or channels (6 to 9) located in the earth, which are accessible from man-holes (3).

19. Apparatus according to one of Claims 1 to 17, characterised in that the laying segment consists of U-shaped cable troughs (89) suspended under building ceilings, each with a trough base (92) and side walls (93, 94).

20. Apparatus according to Claim 19, characterised in that fitted in the cable troughs (89) at a distance from each other are guide blocks (91) for receiving one or more cables (95, 96).

21. Apparatus according to Claim 20, characterised in that the guide blocks (91) are constructed in the form of equilateral triangles, whereof the corners consist of corner blocks (97, 98, 99), between which guide rollers (106, 107, 108) are mounted to rotate easily.

22. Apparatus according to Claim 21, characterised in that towards their ends the guide rollers (106, 107, 108) comprise conical enlargements (109, 110).

23. Apparatus according to Claim 21 or 22, characterised in that the corner blocks (97, 98, 99) comprise bores (100, 101, 102) for receiving connecting rods (103, 104, 105) between adjacent guide blocks (91).

24. Apparatus according to one of Claims 21 to 23, characterised in that attached between the corner blocks (97, 98, 99) of a guide block (91) are strengthening rods (111, 112, 113) outside and parallel to the axes of rotation of the guide rollers (106, 107, 108).

25. Apparatus according to one of Claims 21 to 24, characterised in that one guide roller (108) of each guide block (91) is mounted to tilt or to swing out.

26. Apparatus according to Claim 25, characterised in that provided in two corner blocks (97) are slots (123, 124) for receiving the ends (121, 122) of the shaft (116) of the guide roller (108), which slots extend perpendicularly to the triangular surface, that one shaft end (122) is held by a swivel bolt (125) and the other shaft end (121) is held by a screw bolt (128) in the locked position, and that the screw bolt (128) can be released by means of a handle head (127) and a handle (126).

27. Apparatus according to one of the preceding Claims, characterised in that the outer end of the pulling means (32) is provided with a head, which comprises an optical device, which is designed so that the optical signals can be transmitted by way of glass fibre cables or digital evaluation by the pulling means to the outside of the laying segment.

## Revendications

1. Dispositif de pose de câbles ou de tuyaux flexibles sur un trajet de pose, comprenant un dispositif d'enroulement (11, 16) et un dispositif d'entraînement (22) pour un moyen de traction (32) à une extrémité du trajet de pose, et comprenant un touret de câbles à l'autre extrémité du trajet de pose, le dispositif d'enroulement comportant un bâti (11) pourvu d'une roue de dévidage (16), un guide étant prévu entre le dispositif d'entraînement (22) et l'extrémité du trajet de pose qui en est voisine, caractérisé en ce qu'entre le dispositif d'enroulement (11, 16) et le dispositif d'entraînement (22) d'une part, ainsi qu'entre le dispositif d'entraînement (22) et la zone immédiatement voisine de l'extrémité du trajet de pose (1) d'autre part, il est à chaque fois prévu un guidage forcé (20, 24) souple, résistant à la fois à la pression et à la traction, sous forme d'un tube de guidage pour le moyen de traction (32), en ce que les guidages forcés (20, 24) peuvent être fixés à leur extrémité au moyens de raccords à fermeture rapide (19, 21, 23), en ce qu'un raccord à fermeture rapide (19) est rapporté sur le bâti (11) de la roue de dévidage (16) et en ce qu'entre le raccord à fermeture rapide (19) et l'emplacement d'arrêt et d'entrée du moyen d'entraînement sur la roue de dévidage (16) est prévu un guide (18) installé à demeure pour le moyen d'entraînement (32).

2. Dispositif selon la revendication 1, caractérisé en ce qu'est disposé, avec le plus petit écart possible par rapport à l'extrémité du trajet de pose (1), un dispositif de mise en tension (25) réglable en hauteur et latéralement, comportant un fourreau de guidage (31) pour le moyen de traction (32), et en ce que l'extrémité voisine du tube de guidage (24) est reliée au fourreau de guidage (31).

3. Dispositif selon la revendication 2, caractérisé en ce que le dispositif de mise en tension (25) présente un tube support (26) qui peut être installé verticalement ou horizontalement entre des butées, tube sur lequel le fourreau de guidage (31) peut être installé de manière mobile, en ce qu'une plaque d'assise (27) est fixée sur l'extrémité frontale du tube support (26), et en ce que sur l'autre extrémité du tube support (26) est disposé un arbre (28) réglable manuellement ou à l'aide d'un volant à rayons (30), à l'extrémité extérieure duquel est disposée une plaque de recouvrement (29).

4. Dispositif selon l'une des revendications précédentes, caractérisé en ce que le dispositif d'entraînement (22) comporte une chaîne sans fin (43) qui est guidée alternativement autour de deux paires de roues dentées (39, 41 ; 40, 42), autour d'une roue dentée de retournement (44) et d'une roue dentée d'entraînement (50), et en ce que sont disposées deux paires de roues d'alimentation (51, 53 ; 52, 54) coaxialement aux paires de roues dentées (39, 41 ; 40, 42), entre lesquelles le moyen de traction (32) est mobile suivant le sens de rotation des roues d'alimentation.

5. Dispositif selon la revendication 4, caractérisé en ce qu'au niveau de la zone de la chaîne sans fin (43) située entre la roue dentée de retournement (44) et la roue dentée d'entraînement (50), est appliquée une roue dentée de pression (45).

6. Dispositif selon la revendication 4 ou 5, caractérisé en ce qu'au voisinage de la roue dentée d'entraînement (50), une roue de mise en tension (46) est appliquée sur la chaîne sans fin (43) et en ce que la roue de mise en tension (46) est disposée sur un bras de levier (47) qui peut être réglé et bloqué.

7. Dispositif selon l'une des revendications 4 à 6, caractérisé en ce que, dans la zone de retournement de la roue dentée d'entraînement (50), la chaîne sans fin (43) est entourée d'un bloc de guidage (48) comportant un patin de guidage (49).

8. Dispositif selon l'une des revendications 4 à 7, caractérisé en ce que le moyen de traction (32) se compose d'une tige cylindrique flexible, souple, résistant à la traction et à la pression, et en ce que sont prévues des gorges (55) à la périphérie des roues d'alimentation (51, 52, 53, 54), qui sont adaptées à la forme de la tige.

9. Dispositif selon l'une des revendications précédentes, caractérisé en ce qu'au niveau de la liaison sur le raccord à fermeture rapide (21), du côté de l'entrée du dispositif d'entraînement (22), est fixé un tube de guidage (35) qui pénètre dans ce dernier.

10. Dispositif selon l'une des revendications 4 à 9, caractérisé en ce que dans la zone intermédiaire entre les paires de roues d'entraînement (51, 53 ; 52, 54) est disposé un tube de guidage intercalaire (37).

11. Dispositif selon l'une des revendications 4 à 10, caractérisé en ce qu'un moteur hydraulique (61) est relié à l'axe de la roue dentée d'entraînement (50), moteur qui est alimenté par une pompe hydraulique (59), et en ce que la pompe hydraulique (59) est entraînée par un moteur à combustion (57).

12. Dispositif selon l'une des revendications précédentes, caractérisé en ce que, à l'extrémité extérieure du moyen d'entraînement (32) réalisé en forme de tige, est fixée une tête de mesure de traction (65) à laquelle peut être fixé le câble (69) à poser.

13. Dispositif selon la revendication 12, caractérisé en ce que la tête de mesure de traction (65) présente un espace creux (73) sur la paroi duquel est rapportée une jauge de contrainte (74) qui coopère avec un amplificateur électronique (75).

14. Dispositif selon la revendication 13, caractérisé en ce que l'amplificateur électronique (75) est en relation avec un générateur d'impulsions (86) électronique, par l'intermédiaire de conducteurs électriques (79, 80) ainsi que de câbles de cuivre (81, 82) qui s'étendent sur la totalité de la longueur de la tige (32).

15. Dispositif selon la revendication 14, caractérisé en ce que les conducteurs électriques (79, 80) sont reliées avec un connecteur à cliquet (77) disposé dans la tête de mesure de traction (65), et les câbles de cuivre (81, 82) sont reliés par l'intermédiaire d'un embrayage à cliquet (78), et en ce que l'embrayage à cliquet (78) est fixé dans un fourreau de liaison (70), qui est relié d'un côté avec l'extrémité de la tige (32) et se trouve rapporté de l'autre coté sur la tête de mesure de traction (65) au moyen d'un filetage (71).

16. Dispositif selon la revendication 14 ou 15 caractérisé en ce que la liaison électrique des câbles de cuivre (81, 82) entre l'extrémité de la tige (32) située dans la roue de dévidage (16) du dispositif d'enroulement, et le générateur d'impulsion électronique (86) est réalisée au moyen d'une bague collectrice (83).

17. Dispositif selon l'une des revendications 12 à 16, caractérisé en ce que le générateur d'impulsions électronique (86) est relié à un dispositif d'asservissement du dispositif d'entraînement (22).

18. Dispositif selon l'une des revendications précédentes, caractérisé en ce que le trajet de pose (1) se compose de tubes ou canaux de protection des câbles (6 à 9) se trouvant dans la terre, qui sont accessibles à partir de puits à câbles (3).

19. Dispositif selon l'une des revendications 1 à 17, caractérisé en ce que le trajet de pose se compose de gouttières à câbles (89) en forme de U, suspendues sous les bâtiments et comportant chacune un fond de gouttière (92) et des bordures latérales (93, 94).

20. Dispositif selon la revendication 19 caractérisé en ce que, dans les gouttières à câbles (89), des petits chevalets de guidage (91) sont disposés à distance les uns des autres, pour la réception d'un ou plusieurs câbles (95, 96)

21. Dispositif selon la revendication 20, caractérisé en ce que les petits chevalets de guidage (91) sont réalisés sous forme de triangles isocèles, dont les angles se composent de blocs angulaires (97, 98, 99) entre lesquels sont disposés des rouleaux de guidage (106, 107, 108) qui peuvent pivoter facilement.

22. Dispositif selon la revendication 21, caractérisé en ce que les rouleaux de guidage (106, 107, 108) présentent des élargissements (109, 110) coniques au niveau de leurs extrémités.

23. Dispositif selon la revendication 21 ou 22, caractérisé en ce que les blocs angulaires (97, 98, 99) présentent des alésages (100, 101, 102) permettant de loger des barres de liaisons (103, 104, 105) entre des supports de guidage (91) voisins.

24. Dispositif selon l'une des revendications 21 à 23, caractérisé en ce que, entre les blocs angulaires (97, 98, 99) d'un petit chevalet de guidage (91), sont fixées des barres de renforcement (111, 112, 113) extérieures et parallèles à l'axe de rotation des rouleaux de guidage (106, 107, 108).

25. Dispositif selon l'une des revendications 21 à 24, caractérisé en ce qu'un rouleau de guidage (108) de chaque support de guidage (91), est monté de manière à pouvoir pivoter ou être escamoté.

26. Dispositif selon la revendication 25 caractérisé en ce que, au niveau de deux blocs angulaires (97), sont pratiquées des fentes (123, 124) permettant de loger les extrémités (121, 122) de l'axe (116) du rouleau de guidage (108), qui s'étendent perpendiculairement à la surface du triangle, en ce qu'une extrémité d'axe (122) est arrêtée en position de verrouillage au moyen d'un boulon pivotant (125), et l'autre extrémité d'axe (121) au moyen d'un boulon fileté (128), et en ce que le boulon fileté (128) est amovible au moyen d'une tête d'outil (127) et d'une poignée (126).

27. Dispositif selon l'une des revendications précédentes, caractérisé en ce que l'extrémité extérieure du moyen de traction (32) est pourvue d'une tête qui présente un dispositif optique conçu de telle sorte que les signaux optiques soient transmissibles jusqu'à l'extérieur du trajet de pose le long du moyen de traction par l'intermédiaire de câbles à fibres optiques ou de générateurs d'impulsions digitales.
